# FASCICULE DE BREVET EUROPEEN

(11) **EP 0 648 248 B1**
(45) Date de publication et mention de la délivrance du brevet: **25.11.1998**
(21) Numéro de dépôt: 93913007.6
(22) Date de dépôt: 17.06.1993
(51) Int. Cl.: C09D 125/14, C09D 133/06, D21H 19/20

(54) **COMPOSITION AQUEUSE D'IMPREGNATION**
WÄSSRIGE IMPRÄGNIERZUSAMMENSETZUNG
AQUEOUS IMPREGNATING COMPOSITION

(30) Priorité: 22.06.1992 FR 9207558
(43) Date de publication de la demande: 19.04.1995
(73) Titulaire: ARJO-WIGGINS DEUTSCHLAND GmbH, 72581 Dettingen/Erms (DE)
(72) Inventeur: MATSCHEKO, Horst, D-7500 Karlsruhe (DE); ZACHERT, Stefan, D-67435 Neustadt An Der Weinstrasse (DE)
(74) Mandataire: Domange, Maxime
(86) Numéro de dépôt international: EP9301549
(87) Numéro de publication internationale: WO9400523

(56) Documents cités:
- PATENT ABSTRACTS OF JAPAN vol. 4, no. 16 (C-72)7 Février 1980 & JP-A-54 154 428 ( NITTO DENKO KOGYO KK ) 12 Mai 1979

## Description

L'invention concerne une nouvelle composition d'imprégnation pour des feuilles décoratives qui sont utilisables pour la fabrication de panneaux stratifiés.

On sait qu'il existe plusieurs sortes de panneaux stratifiés: les panneaux dits haute pression, les panneaux dits basse pression et les panneaux comportant une feuille de papier adhésivée.

Depuis de nombreuses années, on emploie des stratifiés comme matériaux dans les habitations et les locaux commerciaux et industriels. Des applications typiques de tels stratifiés sont le revêtement superficiel des murs, des dessus de table, des meubles et autres.

On produit des stratifiés dits haute pression à partir d'une âme constituée de feuilles imprégnées de résine. Les feuilles sont généralement des feuilles de papier kraft qui ont été imprégnées d'une résine thermodurcissable.

Lorsque le papier kraft a été imprégné de résine, on sèche les feuilles, on les découpe, puis on les empile les unes sur les autres. Le nombre de feuilles de la pile dépend des applications et peut varier entre 3 et 9, mais peut être supérieur.

On place ensuite sur la pile de feuilles constituant l'âme, une feuille décorative qui est en général une feuille de papier portant un motif imprimé ou de couleur claire, et imprégnée par une résine thermodurcissable ne noircissant par à la chaleur, par exemple des résines de mélamine-formaldéhyde, des résines de benzoguanamine-formaldhéhyde, des résines de polyester insaturé.

Pendant la densification, les résines thermodurcissables sont transformées en forme thermodurcie et on obtient une matière extrêmement dure et ayant un effet décoratif.

On produit des stratifiés basse pression de manière similaire à celle des stratifiés haute pression, mais on effectue la stratification de la feuille décorative directement sur un panneau de particules de bois ou tout autre support de base.

La troisième sorte de panneau stratifié est constituée par un panneau de particules de bois aglomérées sur lequel on place une feuille de papier préimprégnée, cette feuille étant solidarisée avec le panneau au moyen d'une colle ou d'un adhésif. La feuille de papier peut être de couleur uniforme ou comporter des motifs décoratifs. En général ces motifs décoratifs sont obtenus par impression sur la feuille préimprégnée. L'invention concerne des feuilles préimprégnées pour cette troisième sorte de panneaux stratifiés.

Les compositions d'imprégnation des feuilles décoratives sont de manière traditionnelle des dispersions aqueuses à base de copolymère styrène-acrylate d'éthyle-acrylate de butyle et d'une solution aqueuse de résine mélamine-formaldéhyde. Cependant, ces compositions présentent un inconvénient important. En effet, lors de la manipulation de la feuille imprégnée, il se dégage du formol du fait de la présence de formaldéhyde. Ce formol est nuisible à la santé.

Un premier problème à résoudre est donc de fournir une composition d'imprégnation pour feuilles décoratives pour stratifiés, cette composition ne contenant pas de formaldéhyde.

En général, les feuilles imprégnées sont vendues à des imprimeurs qui impriment les motifs décoratifs sur celles-ci. Il est donc nécessaire que les feuilles imprégnées résistent à la déchirure.

Ces feuilles doivent en outre résister au changement de climat, à savoir aux modifications de la température ambiante et du degré hygrométrique de l'air. Il faut aussi qu'elles soient facilement imprimables et que l'impression obtenue soit correcte.

Un autre but de l'invention est donc de fournir une composition d'imprégnation sans formaldéhyde qui confère en même temps à la feuille imprégnée une bonne résistance à la déchirure et une bonne imprimabilité ainsi qu'une bonne stabilité au stoquage.

Un autre but de l'invention est de fournir des feuilles préimprégnées qui soient flexibles pour permettre leur enroulement.

La nouvelle composition d'imprégnation selon l'invention est telle que la résine mélamine-formadéhyde est supprimée et remplacée par une composition aqueuse d'un liant choisi parmi l'alcool polyvinylique, la polyacétate de vinyle, la gélatine, l'amidon. De préférence on utilise une solution aqueuse d'alcool polyvinylique, et plus préférentiellement de l'alcool polyvinylique à 10 %.

Le pH de la composition d'imprégnation est réglé entre 5,0 et 7,0. La viscosité de cette composition est réglée entre 44,1 à 58,8 m Pa.s.

L'invention est remarquable du fait que si l'alcool polyvinylique est connu de l'homme du métier comme conférant au papier une bonne cohésion, l'homme du métier s'attend à ce que l'alcool polyvinylique qui a une certaine solubilité dans l'eau ne confère pas une résistance à l'humidité. Or, de manière surprenante, l'alcool polyvinylique confère à la feuille une résistance à l'humidité.

La nouvelle composition selon l'invention est telle qu'elle comprend:
- de 5 à 90 parties en poids d'une solution d'alcool polyvinylique de 5 à 15 %
- de 10 à 95 parties en poids d'une dispersion d'un copolymère styrène-acrylate d'éthyle-acrylate de butyle.

De préférence, la composition comprend:
- 50 parties en poids d'une solution d'alcool polyvinylique de 5 à 15 %
- 50 parties en poids d'une dispersion d'un copolymère styrène-acrylate d'éthyle-acrylate de butyle.

De manière surprenante, la feuille imprégnée par une telle composition permet une imprégnation en continu d'une feuille de papier, cette feuille ayant une bonne résistance à la déchirure, une bonne imprimabilité et une bonne résistance au stokage.

L'invention concerne en outre une feuille de papier imprégnée par une telle composition.

La description suivante, en regard des exemples annexés à titre non limitatif, permettra de comprendre comment l'invention peut être mise en pratique.

### EXEMPLE 1

On fabrique une feuille de papier à partir d'une dispersion aqueuse de fibres de cellulose, de liant et de composés habituellement utilisés dans l'industrie du papier. On dispose cette dispersion sur une grille d'une machine à papier du type fourdrinier et on essore cette suspension puis on sèche la feuille ainsi obtenue. On obtient une feuille ayant un grammage de 66 g/m².

On mélange 50 parties en poids d'une dispersion aqueuse d'un copolymère de styrène, acrylate d'éthyle / acrylate de butyle vendu par la société BASF sous le nom ACRONAL et 50 parties en poids d'une solution d'alcool polyvinylique à 10 %. La composition a un pH compris entre 5,0 et 7,0 et sa viscosité est comprise entre 44,1 à 58,8 m Pa.s. On imprègne en size-press la feuille de papier avec cette composition et on sèche. On obtient une feuille préimprégnée ayant un grammage de 80 g/m².

On mesure la quantité de formaldéhyde qui est susceptible de se dégager de la feuille de la manière suivante: on place la feuille préimprégnée dans une enceinte dans laquelle on fait passer un courant d'air et on lave l'air sortant. On mesure la quantité en mg de formaldéhyde dégagé par heure et pas mètre carré de feuille. La quantité de formaldéhyde est inférieure à 0,15mg par heure et par mètre carré.

On mesure la cohésion interne de la feuille par arrachage au "Scotch" (marque déposée par 3M). Cette mesure est effectuée de la manière suivante:

L'échantillon est soumis pendant 2 min à 150 °C, On applique sur une plaque de verre un "scotch" double face et on presse une bande découpée soit dans le sens machine du papier, soit dans le sens travers. On place une bande de "Scotch" sur la bande et la fin de la bande de "Scotch" est appliquée sur un chevalet de 80 mm de hauteur.

On laisse reposer pendant 1 min pour un test court, pendant 24 h pour un test long et pour effectuer un test au climat, on laisse reposer dans une enceinte fermée, pendant 24 h à 40°C, à une humidité relative de 90 %.

Après le temps de repos, on arrache le scotch de l'échantillon. La bande de "Scotch" est appliquée sur un carton blanc ou noir selon la teinte de l'épreuve. On observe à l'oeil nu si l'échantillon a été arraché ou non par le "Scotch".

Le test montre que l'échantillon est résistant à l'arrachage et a une bonne cohésion interne pour les trois tests.

### EXEMPLE 2

On imprègne la feuille de papier fabriquée selon l'exemple 1 avec une composition contenant 90 parties en poids d'une solution à 10 % d'alcool polyvinylique et 10 parties de copolymère de styrène, acrylate d'éthyle / acrylate de butyle.

L'échantillon ne satisfait pas le test d'arrachage après étuvage humide. Il n'est donc pas résistant aux conditions climatiques.

### EXEMPLE 3

On répète l'exemple 1, mais on imprègne la feuille de papier avec une composition contenant 25 parties en poids d'une solution à 15 % d'alcool polyvinylique et 75 parties de copolymère de styrène, acrylate d'éthyle / acrylate de butyle.

L'échantillon satisfait aux trois tests d'arrachage.

## Revendications

1. Utilisation d'une composition aqueuse d'imprégnation pour la fabrication d'une feuille de papier décorative imprégnée destinée à être appliquée sur un support de base au moyen d'une colle afin de former un panneau décoratif, caractérisé par le fait que ladite composition d'imprégnation est substantiellement exempte de formaldéhyde et comprend une composition d'un copolymère styrène-acrylate d'éthyle-acrylate de butyle et d'un liant choisi parmi l'alcool polyvinylique, le polyacétate de vinyle, la gélatine, l'amidon.

2. Utilisation selon la revendication 1, caractérisée par le fait que la composition d'imprégnation comprend :
- de 5 à 90 parties en poids d'une solution d'alcool polyvinylique
- de 10 à 95 parties en poids d'une dispersion d'un copolymère styrène-acrylate d'éthyle-acrylate de butyle.

3. Utilisation selon l'une des revendications précédentes, caractérisée par le fait que la solution d'alcool polyvinylique est une solution de 5 à 15% en alcool polyvinylique.

4. Utilisation selon l'une des revendications précédentes, caractérisée par le fait que le pH de la composition d'imprégnation est compris entre 5,0 et 7,0.

5. Utilisation selon l'une des revendications précédentes, caractérisée par le fait que la viscosité de la composition est comprise entre 44,1 à 58,8 mPa.s.

6. Utilisation selon l'une des revendications précédentes, caractérisée par le fait que la composition comprend :
- 50 parties en poids d'une solution d'alcool polyvinylique de 5 à 15%
- 50 parties en poids d'une dispersion d'un copolymère styrène-acrylate d'éthyle-acrylate de butyle.

7. Feuille de papier décorative imprégnée destinée à être appliquée sur un panneau au moyen d'une colle, caractérisée en ce que elle est imprégnée d'une composition d'imprégnation telle que définie dans l'une des revendications 1 à 6.

8. Procédé de fabrication d'une feuille de papier décoratif destinée à être appliquée sur un support de base au moyen d'une colle afin de former un panneau décoratif, caractérisé en ce que on imprègne ladite feuille avec une composition aqueuse d'imprégnation telle que définie dans l'une des revendications 1 à 6.

## Patentansprüche

1. Verwendung einer wäßrigen Imprägnierungszusammensetzung zur Herstellung eines dekorativen Papierblatts zum Aufbringen auf einen Grundträger mit Hilfe eines Klebstoffs zur Bildung einer dekorativen Platte, dadurch gekennzeichnet, daß besagte Imprägnierungszusammensetzung weitgehend frei von Formaldehyd ist und aus einer Zusammensetzung eines Styrol-Ethylacrylat-Butylacrylatcopolymeren und einem unter Polyvinylalkohol, Polyvinylacetat, Gelatine und Stärke ausgewählten Bindemittel besteht.

2. Verwendung nach Anspruch 1, dadurch gekennzeichnet, daß die Imprägnierungszusammensetzung enthält:
- 5 bis 90 Gewichtsteile einer Polyvinylalkohollösung
- 10 bis 95 Gewichtsteile einer Dispersion eines Styrol-Ethylacrylat-Butylacrylatcopolymeren.

3. Verwendung nach einem der vorhergehenden Ansprüche, dadurch gekennzeichnet, daß die Polyvinylalkohollösung eine 5 bis 15%-ige Lösung von Polyvinylalkohol ist.

4. Verwendung nach einem der vorhergehenden Ansprüche, dadurch gekennzeichnet, daß der pH der Imprägnierungszusammensetzung zwischen 5,0 und 7,0 liegt.

5. Verwendung nach einem der vorhergehenden Ansprüche, dadurch gekennzeichnet, daß die Viskosität der Zusammensetzung 44,1 bis 58,8 mPa.s beträgt.

6. Verwendung nach einem der vorhergehenden Ansprüche, dadurch gekennzeichnet, daß die Zusammensetzung enthält:
- 50 Gewichtsteile einer 5 bis 15%-igen Polyvinylalkohollösung
- 50 Gewichtsteile einer Dispersion eines Styrol-Ethylacrylat-Butylacrylatcopolymeren.

7. Imprägniertes dekoratives Papierblatt zum Aufbringen auf eine Platte mit Hilfe eines Klebstoffs, dadurch gekennzeichnet, daß es mit einer Imprägnierungszusammensetzung wie in einem der Ansprüche 1 bis 6 definiert imprägniert ist.

8. Verfahren zur Herstellung eines dekorativen Papierblatts zum Aufbringen auf einen Grundträger mit Hilfe eines Klebstoffs zur Bildung einer dekorativen Platte, dadurch gekennzeichnet, daß man besagtes Blatt mit einer wäßrigen Imprägnierungszusammensetzung wie in einem der Ansprüche 1 bis 6 definiert imprägniert.

## Claims

1. Use of an aqueous impregnating composition for the manufacture of an impregnated decorative paper sheet intended to be applied on a base support by means of an adhesive in order to form a decorative panel, characterized in that the said impregnating composition is substantially devoid of formaldehyde and comprises a composition comprising a styrene-ethyl acrylate-butyl acrylate copolymer and comprising a binder chosen from poly(vinyl alcohol), poly(vinyl acetate), gelatin and starch.

2. Use according to Claim 1, characterized in that the impregnating composition comprises:
- from 5 to 90 parts by weight of a poly(vinyl alcohol) solution
- from 10 to 95 parts by weight of a dispersion of a styrene-ethyl acrylate-butyl acrylate copolymer.

3. Use according to either of the preceding claims, characterized in that the poly(vinyl alcohol) solution is a solution containing 5 to 15% of poly(vinyl alcohol).

4. Use according to one of the preceding claims, characterized in that the pH of the impregnating composition is between 5.0 and 7.0.

5. Use according to one of the preceding claims, characterized in that the viscosity of the composition is between 44.1 and 58.8 mPa·s.

6. Use according to one of the preceding claims, characterized in that the composition comprises:
- 50 parts by weight of a from 5 to 15% poly(vinyl alcohol) solution
- 50 parts by weight of a dispersion of a styrene-ethyl acrylate-butyl acrylate copolymer.

7. Impregnated decorative paper sheet intended to be applied to a panel by means of an adhesive, characterized in that it is impregnated with an impregnating composition as defined in one of Claims 1 to 6.

8. Process for the manufacture of a decorative paper sheet intended to be applied to a base support by means of an adhesive in order to form a decorative panel, characterized in that the said sheet is impregnated with an aqueous impregnating composition as defined in one of Claims 1 to 6.
